# EUROPEAN PATENT APPLICATION

(11) **EP 4 699 447 A2**
(43) Date of publication of application: **25.02.2026**
(21) Application number: 26151170.3
(22) Date of filing: 25.10.2017
(51) Int. Cl.: A21D 13/062

(54) **METHOD OF MAKING A HIGH-PROTEIN SOFT-BAKED PRODUCT**

(30) Priority: 25.10.2016 EP 16306401; 10.03.2017 US 201762469991 P
(62) Divisional of application: 17787932.7
(71) Applicant: Generale Biscuit, 92140 Clamart (FR)
(72) Inventor: AYMARD, Pierre, 92140 Clamart (FR); CLEMENT, Jerome, 92140 Clamart (FR); NOTARDONATO, Lelia, 92140 Clamart (FR); FERNANDES, Linda, East Hanover, 07936 (US)
(74) Representative: Boult Wade Tennant LLP

(57) **Abstract**

The invention pertains to a soft-baked biscuit that is high in protein, and methods of making the same, that includes a protein component, a multi-textured mouth feel, and crispy inclusions contrasting with a moist and chewy matrix. The protein component may include a powdered protein source and a particulate protein source. The particulate protein source may be in the form of protein crisps, pops, tots, flakes, puffs, inclusions, pellets, bits, and/or particles. In some embodiments of the invention, the protein source includes a powdered protein source in an amount of about 35% by weight of the protein source to about 85% by weight protein powder and about 15% by weight to about 65% by weight particulate protein such as protein crisps. In another embodiment, the soft-baked biscuit may include a protein component and a grain flour, wherein the flour is at least 4% by weight of the soft-baked biscuit. In still further embodiments of the invention, the soft-baked biscuits may be high in protein due to the inclusion of two protein sources while maintaining a low density of up to 0.92 g/cm³ and a water activity (Aw) of between about 0.5 and about 0.7.

## Description

### BACKGROUND OF THE INVENTION

There is a need in the field for high-protein baked products that are soft and have a favorable multi-textured mouth feel.

The invention meets the needs in the field and relates to a high protein containing soft-baked product (e.g., a soft-baked cereal product) that contains both a powdered protein source and a particulate protein source, in proportions that neither give the dense-firm products obtained with powdered proteins only nor the dry-heterogeneous texture products obtained with particulate proteins only. In some embodiments, the baked products described herein keep a multi-textured texture, i.e., maintain a texture contrast between particles and the baked matrix.

### BRIEF SUMMARY OF THE INVENTION

According to some embodiments of the invention, a soft-baked product that may contain a high-protein content. In some embodiments, the soft-baked product may include a protein component that may be at least 15 g per 100 g of soft-baked product and may include a powdered protein source and a particulate protein source. In some embodiments, the protein component includes the powdered protein source in an amount from 35% by weight to 85% by weight of the protein component. In some embodiments, the protein component includes the particulate protein source in an amount from 15% by weight to 65% by weight of the protein component. In some embodiments, the soft-baked products described herein may include a dough-based portion, which may include a grain flour.

In another embodiment, the invention may include a soft-baked product that may include a grain flour in an amount of at least 4% by weight of the soft-baked product. In one embodiment, the soft-baked product may be produced from a dough. In one embodiment, the dough may include a protein blend that may include a powdered protein source and a particulate protein source. In some embodiments, the soft-baked product may have a density of up to 0.92 g/cm³. In some embodiments, the soft-baked product may have a density of up to 0.82 g/cm³. In some embodiments, the soft-baked product may have a density of up to 0.75 g/cm³.

In an embodiment, a multi-textured soft-baked product is provided that may include a protein component that is at least 15 g per 100 g of the soft-baked product and includes a powdered protein source in an amount from 35% by weight to 85% by weight of the protein component and a particulate protein source in an amount from 15% by weight to 65% by weight of the protein component.

In an embodiment, a multi-textured soft-baked product is provided that may include a grain flour that is at least 4% by weight of the soft-baked product, and a protein component that includes a powdered protein source and a particulate protein source, wherein the soft-baked product has a density of up to 0.92 g/cm³.

In an embodiment, a multi-textured soft-baked product is provided that may include a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component, wherein the soft-baked product has a density of up to 0.82 g/cm³.

In an embodiment, a multi-textured soft-baked product is provided that may include a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component, wherein the soft-baked product has a density of up to 0.92 g/cm³.

In another embodiment, the invention may include a method of making a soft-baked product. In some embodiments, the method may include the step of preparing a dough that may include a grain flour and a protein component. In some embodiments, the protein component may include a powdered protein source and a particulate protein source. In some embodiments, the protein component includes the powdered protein source in an amount from 35% by weight to 85% by weight of the protein component, or between about 40% by weight to about 60% by weight of the protein component. In some embodiments, the protein component includes the particulate protein source in an amount from 15% by weight to 65% by weight of the protein component, or between about 40% by weight to about 60% by weight of the protein component. In some embodiments, the method may include the step of baking the dough to provide a soft-baked product.

### DETAILED DESCRIPTION OF THE INVENTION

There is a growing consumer interest in protein-enriched snacks. Protein-enriched snacks are perceived as having a higher or more balanced nutritional profile, owing to an enhanced balance between carbohydrates, fats, and proteins. These snacks are also seen as an opportunity to provide consumer proteins throughout the day, in a global context of meal patterns, which lead mainly to protein consumption at dinner.

However, incorporating significant amounts of protein into snacks may generate a number of issues. Proteins can strongly impact the rheology of dough, markedly reducing or increasing dough viscosity, depending on their functional properties, e.g., their solubility, viscosity, water holding capacity, and emulsifying properties. Proteins also interact with carbohydrates, especially polysaccharides, which may lead to aggregation or phase separation phenomena whose impact on dough rheology is not easily predictable. Adding a large amount of proteins in a dough may result in an evolutive dough, i.e., a dough whose texture and properties show a strong time dependence, making industrial processing of a large dough batch difficult to control. In the case of baked products, this situation may be worsened by the sensitivity of proteins to heat. During baking, proteins "denature" and change conformation and react together, forming large scale aggregates or even a true gel network, able to transform a fluid-plastic dough into a firm solid. Many proteins such as e.g. dairy, eggs, wheat, soy, pea proteins exhibit gelling properties. Such gelling ability is taken advantage of in the food industry, but mostly in highly hydrated applications such as the meat industry. It offers the possibility to bind water and create meat analogues or meat-free/meat-reduced sausages having similar firmness and juiciness as standard meat products. It is however strongly detrimental in the snacks industry, since snacks need to have a low residual moisture in order to be stable over months at room temperature.

During baking, proteins also react with sugars through the Maillard reaction to give aromatic compounds and color. Consumers usually have precise expectations regarding the color of baked snacks. Compared to those snacks having a pale to golden color, incorporation of increased amounts of proteins can induce excessive browning and generate burnt off-notes, which are not appealing to consumers. The protein gelling may also harden the texture of the snack and alter the mouth feel of the snack making it harder to bite into, thicker in mouth, and longer to masticate and dissolve.

One solution is to avoid baking or any substantial heating of the proteins. For example, cold-pressed granola bars are obtained by blending dry ingredients with a hot binder to obtain a dough that can be cast onto a surface, then cooled down until hardening of the binder, followed by cutting and packaging the cold-pressed granola bars. In this process, proteins are only blended with a hot binder for a limited time before cooling. This heat treatment may not be sufficient to induce the same extent of denaturation, aggregation and gelling as a baking step carried out in industrial ovens at temperature largely above 100 °C.

In some instances, such as with high dosages of dairy proteins, unbaked snacks may yet harden over time during shelf-life, thereby reduce consumer acceptance. In such an instance, one technical solution is to incorporate proteins in the form of particles, such as to limit their reactivity and reduce their interaction with other components of the snack. Different types of particles may be used. Extruded particles, preferably those produced with high-shear cooking-extrusion have a low density, a crispy texture, and a visible size, usually between about 1 and about 4 mm. Protein content in the extruded particles may be as high as 90% by weight on a dry matter basis, which allows for the achievement of significant protein fortification. This technical solution may be applied in both unbaked and baked products. Other particles such as flakes of legumes, such as soy flakes or pulses flakes or flakes of grains such as rolled oat flakes, barley flakes may also be used for this purpose. In all cases, the advantages of using protein-rich particles are that they are almost "inert" during processing, including baking and do not significantly interact with other ingredients of the snack composition, providing an efficient way to generate protein-enriched snacks without impact finished product texture.

In some embodiments, using protein in the particulate form has practical limitations. The inclusion of large amounts of particles (e.g., where required to reach the protein target) may give a product which may not be sufficiently cohesive and crumbly. The mouth feel may also be perceived as too dry, too crispy or may require a too long mastication time which is not desired by some consumers. Without being limited to any one theory, this is due to the low density of the particulates, which occupy a large volume per unit mass, such as beyond a certain level of incorporation, the dough-based continuous phase cannot form a continuous-enough matrix around them. This can cause products to tear apart or break during transportation, which is perceived negatively for consumers, especially in the case of long shelf-life packaged snacks, for which convenience and ease of use are key attributes.

As a result of the strong impact of proteins, high-protein baked products have a much higher density and a firm-sticky mouth feel. Consequently, there is a need for high-protein baked products having a lower density, e.g., comparable to that of the same food form without protein enrichment. Furthermore, there is a need for a multi-texture product, comprising visible crispy particles within a soft and melting matrix.

Methods and compositions of some embodiments of the invention relate to baked cereal products containing a high protein content.

Protein content and texture in a baked product (e.g., a baked cereal product) may be controlled, for example, by the formulation of the baked product as set forth herein.

### Soft-Baked Product

The soft-baked products described herein may include cereal ingredients or cereal-based ingredients. The soft-baked products in some embodiments of the invention may be formulated to include desired levels of protein through the incorporation of a protein component in the form of, for example, a protein blend. In some embodiments, the soft-baked product described herein may include a protein component (e.g., a protein blend), a cereal or flour component, sugars, inclusions, additional components, and fat.

Baked products according to embodiments of the invention can take on any suitable form, including but not limited to biscuits, miniature biscuits, cookies, sandwich cookies, iced cookies, cakes, breads, rolls, pastries, or other baked goods such as baked goods that have a developed matrix of air pockets. In some embodiments, the baked products described herein do not include cold-formed products, such as those that are agglomerated or granola bars, for example.

In some embodiments, the baked products described herein may include a dough-based food product that may be prepared by heating dough in an oven (i.e., baked in an oven). In some embodiments, the baked products described herein are not prepared by flash drying.

In some embodiments, the term multi-textured with regard to the baked products (e.g., the soft-baked products) may refer to those baked products that have more than one texture. In some non-limiting examples, the multi-textured aspects are due to the inclusion of a powdered source of protein in combination with a particulate source of protein where the powdered source and particulate source provide separate and distinct textures to the baked products. Additional textures may also be provided to the baked products described herein with one or more inclusions and/or additional components, as described herein.

In some embodiments, soft-baked products may include those embodiments set forth in the Examples described herein.

In some embodiments, the soft-baked products described herein may include those baked products having a water activity (Aw) of about 0.5 to about 0.7 and moisture content of about 5% to about 16% by weight of the baked product.

### Protein Component

Some embodiments of the invention include a protein component.

In some embodiments, a protein component may include at least 10 g of protein per 100 g of the soft-baked product. In some embodiments, the protein component may include at least 11 g of protein per 100 g of the soft-baked product. In some embodiments, the protein component may include at least 12 g of protein per 100 g of the soft-baked product. In some embodiments, the protein component may include at least 13 g of protein per 100 g of the soft-baked product. In some embodiments, the protein component may include at least 14 g of protein per 100 g of the soft-baked product. In some embodiments, the protein component may include at least 15 g of protein per 100 g of the soft-baked product. In some embodiments, the protein component may include at least 16 g of protein per 100 g of the soft-baked product. In some embodiments, the protein component may include at least 17 g of protein per 100 g of the soft-baked product. In some embodiments, the protein component may include at least 16 g of protein per 100 g of the soft-baked product. In some embodiments, the protein component may include at least 18 g of protein per 100 g of the soft-baked product. In some embodiments, the protein component may include at least 19 g of protein per 100 g of the soft-baked product. In some embodiments, the protein component may include at least 20 g of protein per 100 g of the soft-baked product. In some embodiments, the protein component may include at least 25 g of protein per 100 g of the soft-baked product. In some embodiments, the protein component may include up to 30 g of protein per 100 g of the soft-baked product.

In some embodiments, the protein component may be included at about 15 g to about 30 g per 100 g of the soft-baked product. In some embodiments, the protein component may be included at about 16 g to about 30 g per 100 g of the soft-baked product. In some embodiments, the protein component may be included at about 17 g to about 30 g per 100 g of the soft-baked product. In some embodiments, the protein component may be included at about 18 g to about 30 g per 100 g of the soft-baked product. In some embodiments, the protein component may be included at about 19 g to about 30 g per 100 g of the soft-baked product. In some embodiments, the protein component may be included at about 20 g to about 30 g per 100 g of the soft-baked product. In some embodiments, the protein component may be included at about 21 g to about 30 g per 100 g of the soft-baked product. In some embodiments, the protein component may be included at about 22 g to about 30 g per 100 g of the soft-baked product. In some embodiments, the protein component may be included at about 23 g to about 30 g per 100 g of the soft-baked product. In some embodiments, the protein component may be included at about 24 g to about 30 g per 100 g of the soft-baked product. In some embodiments, the protein component may be included at about 25 g to about 30 g per 100 g of the soft-baked product. In some embodiments, the protein component may be included at about 20 g to about 27 g per 100 g of the soft-baked product. In some embodiments, the protein component may be included at about 20 g to about 25 g per 100 g of the soft-baked product.

In some embodiments, the soft-baked products described herein may be understood to have a total protein content, which is inclusive of all protein sources. In some embodiments, the total protein content of the soft-baked product is about 12 g to about 35 g per 100 g of the soft-baked product. In some embodiments, the total protein content of the soft-baked product is about 15 g to about 30 g per 100 g of the soft-baked product. In some embodiments, the total protein content of the soft-baked product is about 20 g to about 25 g per 100 g of the soft-baked product. In some embodiments, the total protein content of the soft-baked product is at least 12 g per 100 g of the soft-baked product. In some embodiments, the total protein content of the soft-baked product is at least 15 g per 100 g of the soft-baked product. In some embodiments, the total protein content of the soft-baked product is at least 20 g per 100 g of the soft-baked product. In some embodiments, the total protein content of the soft-baked product is at least 25 g per 100 g of the soft-baked product. In some embodiments, the total protein content of the soft-baked product is at least 30 g per 100 g of the soft-baked product. In some embodiments, to total protein content of the soft-baked product is greater than the amount of protein contributed by the protein component.

In some embodiments, the protein component may include but is not limited to grain, oilseeds, dairy and/or pulses proteins. Examples of grain proteins include wheat, corn, oat and rice proteins. Examples of oilseed proteins may include soy, peanut, canola, and sesame. Example of dairy proteins may include whey proteins and caseins or caseinates from bovine milk. Examples of pulses proteins may include pea, lentil, beans, fava beans, lupins, and other listed in the definition of pulses provided by the Food and Agriculture Organization of the United Nations (see, e.g., www.fao.org/es/faodef/fdef04e.htm). Additionally, other protein sources could be used, including, for example, egg powders ( which may include for example, approx. 40-50% proteins), whole soy beans (which may include for example, approx. 40% proteins), soy bean flours (which may include for example, approx. 50% to 65% proteins), pulses flours (which may include for example, approx. 20% to 35% proteins), whole oat flakes or cuts (which may include for example, approx. 13% proteins), germs from grains ( which may include for example, approx. 15 to 30% proteins), or grain flours or fractions ( which may include for example, approx. 5 to 20% proteins). Plant flours obtained for instance by milling grains or pulses, can be air classified in order to increase protein content. An example of air classification is shown, for example, in Wu, et al., "Protein Concentrate from Air Classification of High-Protein Soft Wheat Flours," Journal of Food Science (1979) 44: 453-455, the entirety of which is incorporated herein by reference.

In certain embodiments, the soft-baked products described herein, and specifically the protein component, may include a powdered protein source and a particulate protein source. In some embodiments, the protein component may consist of a powdered protein source and a particulate protein source. In some embodiments, the protein component may consist of two or more powdered protein sources and of two or more of particulate protein sources. In some embodiments, the powdered protein source and particulate protein source may be provided in the protein component in a weight ratio of about 35% to about 85% powdered protein source to about 15% to about 65% particulate protein source. In some embodiments, the powdered protein source and particulate protein source are provided in a weight ratio of at least 35% powdered protein source to up to 65% particulate protein source. In some embodiments, the powdered protein source and particulate protein source are provided in a weight ratio of at least 40% powdered protein source to up to 60% particulate protein source. In some embodiments, the powdered protein source and particulate protein source are provided in a weight ratio of at least 45% powdered protein source to up to 55% particulate protein source. In some embodiments, the powdered protein source and particulate protein source are provided in a weight ratio of at least 50% powdered protein source to up to 50% particulate protein source. In some embodiments, the powdered protein source and particulate protein source are provided in a weight ratio of at least 55% powdered protein source to up to 45% particulate protein source. In some embodiments, the powdered protein source and particulate protein source are provided in a weight ratio of at least 60% powdered protein source to up to 40% particulate protein source. In some embodiments, the powdered protein source and particulate protein source are provided in a weight ratio of at least 65% powdered protein source to up to 35% particulate protein source. In some embodiments, the powdered protein source and particulate protein source are provided in a weight ratio of at least 70% powdered protein source to up to 30% particulate protein source. In some embodiments, the powdered protein source and particulate protein source are provided in a weight ratio of at least 75% powdered protein source to up to 25% particulate protein source. In some embodiments, the powdered protein source and particulate protein source are provided in a weight ratio of at least 80% powdered protein source to up to 20% particulate protein source.

In some embodiments, a protein component of the baked products described herein may include a powdered protein source and a particulate protein source at a weight ratio of about 35%:65% powdered protein source to particulate protein source; or about 36%:64% powdered protein source to particulate protein source; or about 37%:63% powdered protein source to particulate protein source; or about 38%:62% powdered protein source to particulate protein source; or about 39%:61% powdered protein source to particulate protein source; or about 40%:60% powdered protein source to particulate protein source; or about 41%:59% powdered protein source to particulate protein source; or about 42%:58% powdered protein source to particulate protein source; or about 43%:57% powdered protein source to particulate protein source; or about 44%:56% powdered protein source to particulate protein source; or about 45%:55% powdered protein source to particulate protein source; or about 46%:54% powdered protein source to particulate protein source; or about 47%:53% powdered protein source to particulate protein source or about 48%:52% powdered protein source to particulate protein source; or about 49%:51% powdered protein source to particulate protein source; or about 50%:50% powdered protein source to particulate protein source; or about 51%:49% powdered protein source to particulate protein source; or about 52%:48% powdered protein source to particulate protein source; or about 53%:47% powdered protein source to particulate protein source; or about 54%:46% powdered protein source to particulate protein source; or about 55%:45% powdered protein source to particulate protein source; or about 56%:44% powdered protein source to particulate protein source; or about 57%:43% powdered protein source to particulate protein source; or about 58%:42% powdered protein source to particulate protein source; or about 59%:41% powdered protein source to particulate protein source; or about 60%:40% powdered protein source to particulate protein source; or about 61%:39% powdered protein source to particulate protein source; or about 62%:38% powdered protein source to particulate protein source; or about 63%:37% powdered protein source to particulate protein source; or about 64%:36% powdered protein source to particulate protein source; or about 65%:35% powdered protein source to particulate protein source; or about 66%:34% powdered protein source to particulate protein source; or about 67%:33% powdered protein source to particulate protein source; or about 68%:32% powdered protein source to particulate protein source; or about 69%:31 % powdered protein source to particulate protein source; or about 70%:30% powdered protein source to particulate protein source; or about 71%:29% powdered protein source to particulate protein source; or about 72%:28% powdered protein source to particulate protein source; or about 73%:27% powdered protein source to particulate protein source; or about 74%:26% powdered protein source to particulate protein source; or about 75%:25% powdered protein source to particulate protein source; or about 76%:24% powdered protein source to particulate protein source; or about 77%:23% powdered protein source to particulate protein source; or about 78%:22% powdered protein source to particulate protein source; or about 79%:21 % powdered protein source to particulate protein source; or about 80%:20% powdered protein source to particulate protein source; or about 81%:19% powdered protein source to particulate protein source; or about 82%:18% powdered protein source to particulate protein source; or about 83%:17% powdered protein source to particulate protein source; or about 84%:16% powdered protein source to particulate protein source; or about 85%:15% powdered protein source to particulate protein source.

In some embodiments, a protein component of the baked products described herein may include a powdered protein source in an amount of at least 35 wt%; or at least 36 wt%; or at least 37 wt%; or at least 38 wt%; or at least 39 wt%; or at least 40 wt%; or at least 41 wt%; or at least 42 wt%; or at least 43 wt%; or at least 44 wt%; or at least 45 wt%; or at least 46 wt%; or at least 47 wt%; or at least 48 wt%; or at least 49 wt%; or at least 50 wt%; or at least 51 wt%; or at least 52 wt%; or at least 53 wt%; or at least 54 wt%; or at least 55 wt%; or at least 56 wt%; or at least 57 wt%; or at least 58 wt%; or at least 59 wt%; or at least 60 wt%; or at least 61 wt%; or at least 62 wt%; or at least 63 wt%; or at least 64 wt%; or at least 65 wt%; or at least 66 wt%; or at least 67 wt%; or at least 68 wt%; or at least 69 wt%; or at least 70 wt%; or at least 71 wt%; or at least 72 wt%; or at least 73 wt%; or at least 74 wt%; or at least 75 wt%; or at least 76 wt%; or at least 77 wt%; or at least 78 wt%; or at least 79 wt%; or at least 80 wt%; or at least 81 wt%; or at least 82 wt%; or at least 83 wt%; or at least 84 wt%; or at least 85 wt%.

In some embodiments, a protein component of the baked products described herein may include a particulated protein source in an amount of at least 15 wt%; or at least 16 wt%; or at least 17 wt%; or at least 18 wt%; or at least 19 wt%; or at least 20 wt%; or at least 21 wt%; or at least 22 wt%; or at least 23 wt%; or at least 24 wt%; or at least 25 wt%; or at least 26 wt%; or at least 27 wt%; or at least 28 wt%; or at least 29 wt%; or at least 30 wt%; or at least 31 wt%; or at least 32 wt%; or at least 33 wt%; or at least 34 wt%; or at least 35 wt%; or at least 36 wt%; or at least 37 wt%; or at least 38 wt%; or at least 39 wt%; or at least 40 wt%; or at least 41 wt%; or at least 42 wt%; or at least 43 wt%; or at least 44 wt%; or at least 45 wt%; or at least 46 wt%; or at least 47 wt%; or at least 48 wt%; or at least 49 wt%; or at least 50 wt%; or at least 51 wt%; or at least 52 wt%; or at least 53 wt%; or at least 54 wt%; or at least 55 wt%; or at least 56 wt%; or at least 57 wt%; or at least 58 wt%; or at least 59 wt%; or at least 60 wt%; or at least 61 wt%; or at least 62 wt%; or at least 63 wt%; or at least 64 wt%; or at least 65 wt%.

In some embodiments, a particulate protein source may include a source of protein that has been particulated. In some particulated protein sources, at least one dimension of each protein particle or unit of the particulate protein source is greater than or equal to 1 mm. In some embodiments, each protein particle or unit of the particulate protein source may have a protein content of at least 50% or at least about 50% protein by weight of the protein particle. In some embodiments, a particulate protein source may be in the form of protein extruded crisps, tots, pellets, flakes, bits, particles, or a combination thereof.

In some embodiments, a powdered protein source may include a source of protein, as described herein, that may have been ground, divided, sifted, and/or otherwise milled to provide a fine or coarse powder.

In some embodiments, the baked product described herein may include at least 4 g of protein; or at least 4.5 g of protein; or at least 5 g of protein; or at least 5.5 g of protein; or at least 6 g of protein; or at least 6.5 g of protein; or at least 7 g of protein; or at least 7.5 g of protein; or at least 8 g of protein; or at least 8.5 g of protein; or at least 8.5 g of protein; or at least 9 g of protein; or at least 9.5 g of protein; or at least 10 g of protein; or at least 10.5 g of protein; or at least 11 g of protein; or at least 11.5 g of protein; or at least 12 g of protein; or at least 12.5 g of protein; or at least 13 g of protein; or at least 13.5 g of protein; or at least 14 g of protein; or at least 14.5 g of protein; or at least 15 g of protein; or at least 15.5 g of protein; or at least 16 g of protein; or at least 16.5 g of protein; or at least 17 g of protein; or at least 17.5 g of protein; or at least 18 g of protein; or at least 18.5 g of protein; or at least 19 g of protein; or at least 19.5 g of protein; or at least 20 g of protein; or at least 20.5 g of protein; or at least 21 g of protein; or at least 21.5 g of protein; or at least 22 g of protein; or at least 22.5 g of protein; or at least 23 g of protein; or at least 23.5 g of protein; or at least 24 g of protein; or at least 24.5 g of protein; or at least 25 g of protein; or at least 25.5 g of protein; or at least 26 g of protein; or at least 27 g of protein; or at least 28 g of protein; or at least 29 g of protein; or at least 30 g of protein.

In some embodiments, the baked product described herein may include up to 4 g of protein; or up to 4.5 g of protein; or up to 5 g of protein; or up to 5.5 g of protein; or up to 6 g of protein; or up to 6.5 g of protein; or up to 7 g of protein; or up to 7.5 g of protein; or up to 8 g of protein; or up to 8.5 g of protein; or up to 8.5 g of protein; or up to 9 g of protein; or up to 9.5 g of protein; or up to 10 g of protein; or up to 10.5 g of protein; or up to 11 g of protein; or up to 11.5 g of protein; or up to 12 g of protein; or up to 12.5 g of protein; or up to 13 g of protein; or up to 13.5 g of protein; or up to 14 g of protein; or up to 14.5 g of protein; or up to 15 g of protein; or up to 15.5 g of protein; or up to 16 g of protein; or up to 16.5 g of protein; or up to 17 g of protein; or up to 17.5 g of protein; or up to 18 g of protein; or up to 18.5 g of protein; or up to 19 g of protein; or up to 19.5 g of protein; or up to 20 g of protein; or up to 20.5 g of protein; or up to 21 g of protein; or up to 21.5 g of protein; or up to 22 g of protein; or up to 22.5 g of protein; or up to 23 g of protein; or up to 23.5 g of protein; or up to 24 g of protein; or up to 24.5 g of protein; or up to 25 g of protein; or up to 25.5 g of protein; or up to 26 g of protein; or up to 27 g of protein; or up to 28 g of protein; or up to 29 g of protein; or up to 30 g of protein.

In some embodiments, the proteins found within the protein component and/or the baked product may be complete proteins in the sense of the Amino Acid Score defined by FAO/WHO 1985 ("Energy and Protein Requirements," Technical Report Series 724 (1985) World Health Organization, Geneva the entirety of which is incorporated herein by reference. In some embodiments, such proteins within the protein component and/or the baked product as a whole may have a protein digestibility corrected amino acid score (PDCAAS) of at least 0.8 or at least 0.85. In some embodiments, PDCAAS may be determined as set forth in U.S. Published Application No. 2014/021565, the entirety of which is incorporated herein by reference.

In some embodiments, the proteins described herein may be derived from plant-based proteins, milk-based proteins, egg-based proteins, or a combination thereof.

In some embodiments, plant-based proteins may include, for example, wheat proteins (wheat protein concentrate or isolate), soy proteins (soy protein flour, concentrate or isolate), and pulse proteins (flour, concentrate or isolate). In some embodiments, pulse proteins may be derived from, for example, chickpeas, common beans, common peas, fava beans, lentils, lima beans, lupins, mung beans, peanuts, pigeon peas, and/or runner beans.

In some embodiments, milk-based proteins may include, for example, whey proteins.

In an embodiment, a multi-textured soft-baked product is provided that may include a protein component that is at least 15 g per 100 g of the soft-baked product and includes a powdered protein source in an amount from 35% by weight to 85% by weight of the protein component and a particulate protein source in an amount from 15% by weight to 65% by weight of the protein component.

In an embodiment, a multi-textured soft-baked product is provided that may include a grain flour that is at least 4% by weight of the soft-baked product, and a protein component that includes a powdered protein source and a particulate protein source, wherein the soft-baked product has a density of up to 0.92 g/cm³.

In an embodiment, a multi-textured soft-baked product is provided that may include a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component, wherein the soft-baked product has a density of up to 0.82 g/cm³.

In an embodiment, a multi-textured soft-baked product is provided that may include a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component, wherein the soft-baked product has a density of up to 0.92 g/cm³.

In some embodiments, the protein component may be about 20 g to about 27 g per 100 g of the soft-baked product.

In some embodiments, the particulate protein source comprises at least one protein particle comprising at least about 50% protein by weight of the protein particle.

In some embodiments, the powdered protein source is present in an amount of about 40% by weight to about 60% by weight of the protein component and the particulate protein source is present in an amount of about 40% by weight to about 60% by weight of the protein component.

In some embodiments, the powdered protein source comprises at least two different powdered protein sources and the particulate protein source comprises at least two different particulate protein sources.

### Powdered Protein Source

In one embodiment, the powdered protein source may be included to provide both a source of protein and smooth texture to the baked products described herein.

In some embodiments, the powdered protein source may include at least two sources of proteins.

In some embodiments, the powdered protein source may include a protein selected from the group consisting of plant-based proteins, milk-based proteins, and a combination thereof.

In certain specific embodiments, the powdered protein source may include plant-based protein such as, for example, soy protein, wheat protein, and a combination thereof. In some embodiments, soy proteins may be soy flours (containing according to FDA between 50% and 65% proteins), soy concentrates (containing between 65% and 90% proteins on dry matter basis), and/or isolates (containing more than 90% proteins on dry matter basis). In some embodiments, wheat protein may be "lightly" or "partially" hydrolyzed wheat gluten, such as, for example, the result of a partial enzymatic hydrolysis carried out on wheat gluten. This partial hydrolysis changes the properties of gluten protein by making it partially soluble. Typically approximately 50% of the protein is soluble and becomes part of the continuous phase of the dough matrix, contributing to product cohesiveness after baking.

In some specific embodiments, the powdered protein source may include milk-based protein such as, for example, whey proteins.

Moreover, in certain specific embodiments, the powdered protein source may include egg-based protein.

In some embodiments, the powdered protein source may include a plant-based protein in an amount of about 84 wt% to about 100 wt% of the powdered protein source.

### Particulate Protein Source

The particulate protein source is included to provide another source of protein while also providing additional texture to the baked products described herein to allow for multi-textured baked products.

In some embodiments, the particulate protein source may include at least two sources of proteins. In some embodiments, the particulate protein source may be in the form of extruded crisps, tots, pellets, bits, particles, or a combination thereof.

In some embodiments, the particulate protein source may be prepared from puffing, popping processes and/or extrusion processes.

In some embodiments, the particulate protein source may be or may include a protein selected from the group consisting of plant-based proteins, milk-based proteins, and a combination thereof.

In certain specific embodiments, the particulate protein source may include a plant-based protein such as, for example, pulse proteins, soybean proteins, wheat proteins, or a combination thereof.

In some embodiments, the particulate protein source may include a plant-based protein in an amount of about 50 wt% to about 77 wt% of the particulate protein source.

In certain specific embodiments, the particulate protein source may include a milk-based protein such as, for example, milk protein, whey protein, or a combination thereof.

In certain embodiments, the particulate protein source may include an egg-based protein.

### Carbohydrates

Sugar may be present in the baked product in the form of simple sugars (mono and di-saccharides), sugar alcohols, oligosaccharides, polysaccharides, including, but not limited to, starch fractions. In some embodiments, certain sugar ingredients are selected to provide a desired texture, taste (sweetness), or a combination of textures.

In some embodiments, the baked product includes sugars (e.g., mono and disaccharides) in an amount of about 0.1 wt% to about 27 wt % of the baked product; about 1 wt% to about 25 wt% of the baked product; about 5 wt% to about 25 wt% of the baked product; about 10 wt% to about 25 wt% of the baked product; about 20 wt% to about 30 wt% of the baked product; at least 1 wt% of the baked product; at least 5 wt% of the baked product; at least 10 wt% of the baked product; at least 15 wt% of the baked product; at least 20 wt% of the baked product; at least 23 wt% of the baked product; at least 25 wt% of the baked product; or up to 1 wt% of the baked product; up to 5 wt% of the baked product; up to 10 wt% of the baked product; up to 15 wt% of the baked product; up to 20 wt% of the baked product; up to 23 wt% of the baked product; up to 25 wt% of the baked product; or up to 27 wt% of the baked product.

### Flour

In some embodiments, the baked product includes flour. Suitable flour may include refined flour and/or whole grain flour. Wholegrain flour is understood to mean flour produced directly or indirectly from cereal whole grains comprising endosperm, bran and germ. Wholegrain flour may also be reconstituted from separate flours made from endosperm, bran and germ respectively in ratios that give the reconstituted wholegrain flour the same composition as wholegrain flour directly produced from grains that still retain bran and germ. Refined flour is understood to mean flour produced from cereal endosperm only.

In some embodiments, the baked product may include any suitable whole grain and/or refined flour such as wheat flour, graham flour, buckwheat flour, oat flour, corn flour, rye flour, barley flour, spelt flour, millet flour, teff flour, triticale flour, amaranth flour, quinoa flour, soft wheat flour, hard wheat flour, durum wheat flour, and kamut flour.

In some embodiments, the flour may include carbohydrates derived from sources including but not limited to whole grains, flour, flakes, grits, cuts from various cereals or pseudo-cereals, for example, wheat, oats, rye, barley, spelt, millet, sorghum, kamut, triticale, buckwheat, quinoa, and/or amaranth. In some embodiments, carbohydrates are provided from whole grains. All the cereals or pseudo-cereals can be whole grain and whole grains can be used in variety of forms for example, in the form of flour, flakes, grits, or cuts. Combinations of all grains, pseudo-cereals, and variety of their forms can be included in the formulation.

In some embodiments, whole grains may be understood to include the grain in its entirety, for example as a wheat berry or kernel, prior to any processing. As indicated in the U.S. Food and Drug Administration (FDA) February 15, 2006 draft guidance and as used herein, the term "whole grain" may include cereal grains that consist of the intact, ground, cracked or flaked fruit of the grains whose principal components - the starchy endosperm, germ and bran - are present in the same relative proportions as they exist in the intact grain. The FDA outlined that such grains may include, for example, barley, buckwheat, bulgur, corn, millet, flee, rye, oats, sorghum, wheat, and wild rice.

In some embodiments, the baked product may include grain flour selected from the group consisting of Graham flour, soft wheat flour, hard wheat flour, buckwheat flour, oat flour, corn flour, rye flour, barley flour, spelt flour, rice flour, millet flour, teff flour, triticale flour, amaranth flour, quinoa flour, durum wheat flour, kamut flour, and a combination thereof.

Soft wheat flour may include soft red flour and/or soft white flour. Terms "soft" and "hard" are understood to refer to the hardness of the grains rather than the species of wheat. Hardness of the grains may be due to density of the endosperm cells. Soft wheat endosperm has a lower density, which corresponds to weaker starch and protein bonds. Consequently, soft wheat grains may be crushed into fine particles, damaging less starch than in hard wheat grains.

In some embodiments, the baked product includes a grain flour, such as a refined flour and/or a whole grain flour, in an amount of about 4 wt% to about 22 wt%; about 4 wt% to about 15 wt%; 4 wt% to about 10 wt%; 4 wt% to about 9 wt%; 4 wt% to about 8 wt%; 4 wt% to about 7 wt%; 4.5 wt% to about 22 wt%; about 4.5 wt% to about 15 wt%; 4.5 wt% to about 10 wt%; 4.5 wt% to about 9 wt%; 4.5 wt% to about 8 wt%; 4.5 wt% to about 7 wt%; 5 wt% to about 22 wt%; about 5 wt% to about 15 wt%; 5 wt% to about 10 wt%; 5 wt% to about 9 wt%; 5 wt% to about 8 wt%; 5 wt% to about 7 wt%; 7 wt% to about 22 wt%; about 8 wt% to about 22 wt%; about 8 wt% to about 15 wt%; about 9 wt% to about 15 wt% of the baked product; about 10 wt% to about 15 wt% of the baked product; about 10 wt% to about 14 wt% of the baked product; about 11 wt% to about 13 wt% of the baked product; at least 4 wt% of the baked product; at least 4.5 wt% of the baked product; at least 5 wt% of the baked product; at least 6 wt% of the baked product; at least 7 wt% of the baked product; at least 8 wt% of the baked product; at least 9 wt% of the baked product; at least 10 wt% of the baked product; at least 11 wt% of the baked product; at least 12 wt% of the baked product; at least 13 wt% of the baked product; at least 14 wt% of the baked product; at least 15 wt% of the baked product; at least 16 wt% of the baked product; at least 17 wt% of the baked product; at least 18 wt% of the baked product; at least 19 wt% of the baked product; at least 20 wt% of the baked product; at least 21 wt% of the baked product; at least 22 wt% of the baked product; up to 4 wt% of the baked product; up to 4.5 wt% of the baked product; up to 5 wt% of the baked product; up to 6 wt% of the baked product; up to 7 wt% of the baked product up to 8 wt% of the baked product; up to 9 wt% of the baked product; up to 10 wt% of the baked product; up to 11 wt% of the baked product; up to 12 wt% of the baked product; up to 13 wt% of the baked product; up to 14 wt% of the baked product; up to 15 wt% of the baked product; up to 16 wt% of the baked product; up to 17 wt% of the baked product; up to 18 wt% of the baked product; up to 19 wt% of the baked product; up to 20 wt% of the baked product; up to 21 wt% of the baked product; or up to 22 wt% of the baked product.

In some embodiments, the baked product includes wholegrain flour. In certain embodiments, the wholegrain flour comprises at least two different types of wholegrain flours. Suitable types of wholegrain flours may include but are not limited to wholegrain wheat flour, wholegrain barley flour, wholegrain rye flour, wholegrain spelt flour, wholegrain buckwheat flour, wholegrain oat flour, wholegrain rice flour, wholegrain maize flour, wholegrain millet flour, wholegrain kamut flour, wholegrain sorghum flour, wholegrain teff flour, wholegrain triticale flour, and pseudocereal flour such as amaranth flour and quinoa flour, and mixture thereof. In some embodiments, the baked product may include whole grain flour in an amount of about 4 wt% to about 22 wt%; about 4 wt% to about 15 wt%; 4 wt% to about 10 wt%; 4 wt% to about 9 wt%; 4 wt% to about 8 wt%; 4 wt% to about 7 wt%; 4.5 wt% to about 22 wt%; about 4.5 wt% to about 15 wt%; 4.5 wt% to about 10 wt%; 4.5 wt% to about 9 wt%; 4.5 wt% to about 8 wt%; 4.5 wt% to about 7 wt%; 5 wt% to about 22 wt%; about 5 wt% to about 15 wt%; 5 wt% to about 10 wt%; 5 wt% to about 9 wt%; 5 wt% to about 8 wt%; 5 wt% to about 7 wt%;7 wt% to about 22 wt%; about 8 wt% to about 22 wt%; about 8 wt% to about 15 wt%; about 9 wt% to about 15 wt% of the baked product; about 10 wt% to about 15 wt% of the baked product; about 10 wt% to about 14 wt% of the baked product; about 11 wt% to about 13 wt% of the baked product; at least 4 wt%; at least 4.5 wt%; at least 5 wt%; at least 6 wt%; at least 7 wt% of the baked product; at least 8 wt% of the baked product; at least 9 wt% of the baked product; at least 10 wt% of the baked product; at least 11 wt% of the baked product; at least 12 wt% of the baked product; at least 13 wt% of the baked product; at least 14 wt% of the baked product; at least 15 wt% of the baked product; at least 16 wt% of the baked product; at least 17 wt% of the baked product; at least 18 wt% of the baked product; at least 19 wt% of the baked product; at least 20 wt% of the baked product; at least 21 wt% of the baked product; at least 22 wt% of the baked product; up to 4 wt% of the baked product; up to 4.5 wt% of the baked product; up to 5 wt% of the baked product; up to 6 wt% of the baked product; up to 7 wt% of the baked product up to 8 wt% of the baked product; up to 9 wt% of the baked product; up to 10 wt% of the baked product; up to 11 wt% of the baked product; up to 12 wt% of the baked product; up to 13 wt% of the baked product; up to 14 wt% of the baked product; up to 15 wt% of the baked product; up to 16 wt% of the baked product; up to 17 wt% of the baked product; up to 18 wt% of the baked product; up to 19 wt% of the baked product; up to 20 wt% of the baked product; up to 21 wt% of the baked product; or up to 22 wt% of the baked product.

In some embodiments, the baked product includes flakes. Flakes may be formed from any suitable grain, including wheat, rye, buckwheat, oats, barley, spelt, triticale, teff, millet, sorghum, quinoa, amaranth, kamut, durum wheat and combinations thereof or from any suitable legume such as soy flakes or pulses flakes (e.g,, pea, lentil, chickpea, or beans, for example). The process of preparing flakes and specific processing conditions may depend on the botanical origin of flakes. Some flakes such as rye or barley or wheat or may include grains that are hydrated and/or steamed and/or heated, and rolled and thereby flattened into a grain flake. The flakes may consist of entire grain berries, such as whole oat flakes, medium oat flakes, quick cooking oats, or can be milled further to reduce their size. In some embodiments, the baked product includes flakes in an amount of about 0.1 wt% to about 15 wt% of the baked product; about 0.5 wt% to about 10 wt% of the baked product; about 1 wt% to about 10 wt% of the baked product; about 5 wt% to about 10 wt% of the baked product; about 10 wt% to about 10 wt% of the baked product; at least 0.1 wt% of the baked product; at least 1 wt% of the baked product; at least 5 wt% of the baked product; or at least 10 wt% of the baked product.

In some embodiments, the baked product includes groats, grits, and/or cuts. Groats, grits, and/or cuts may be formed from any suitable grain or seed, including oats, buckwheat, quinoa, amaranth, millet, wheat, barley, spelt, kamut, triticale, sorghum, corn, or rye and combinations thereof. In some embodiments, the baked product includes groats, grits, and/or cuts in an amount of about 0.1 wt% to about 15 wt% of the baked product; about 0.5 wt% to about 10 wt% of the baked product; about 1 wt% to about 10 wt% of the baked product; about 5 wt% to about 10 wt% of the baked product; about 10 wt% to about 10 wt% of the baked product; at least 0.1 wt% of the baked product; at least 1 wt% of the baked product; at least 5 wt% of the baked product; or at least 10 wt% of the baked product.

In some embodiments, the baked product includes whole grains in an amount of at least 3 wt% of the baked product; at least 3.5 wt% of the baked product; at least 4 wt% of the baked product; at least 4.5 wt% of the baked product; at least 5 wt% of the baked product; at least 5.5 wt% of the baked product; at least 6.0 wt% of the baked product; at least 6.5 wt% of the baked product; at least 7.0 wt% of the baked product; at least 7.5 wt% of the baked product; at least 8.0 wt% of the baked product; at least 8.5 wt% of the baked product; at least 9 wt% of the baked product; at least 9.5 wt% of the baked product; at least 10 wt% of the baked product; at least 10.5 wt% of the baked product; at least 11 wt% of the baked product; at least 11.5 wt% of the baked product; at least 12 wt% of the baked product; at least 12.5 wt% of the baked product; at least 13 wt% of the baked product; at least 13.5 wt% of the baked product; at least 14 wt% of the baked product; at least 14.5 wt% of the baked product; at least 15 wt% of the baked product; at least 16 wt% of the baked product; at least 17 wt% of the baked product; at least 18 wt% of the baked product; at least 19 wt% of the baked product; at least 20 wt% of the baked product; at least 21 wt% of the baked product; about 3 wt% to about 22 wt% of the baked product; about 4 wt% to about 20 wt% of the baked product; or about 5 wt% to about 19 wt% of the baked product.

### Fat

Baked products described herein may include fat in desired amounts. Fat may be added to the baked product from any suitable source, including but not limited to shortenings and oils.

In some embodiments, the baked product may include fat in an amount of about 0.1 wt% to about 25 wt% of the baked product; about 0.1 wt% to about 20 wt% of the baked product; about 1 wt% to about 15 wt% of the baked product; about 1 wt% to about 10 wt% of the baked product; about 0.1 wt% of the baked product; about 1 wt% of the baked product; about 5 wt% of the baked product; about 10 wt% of the baked product; about 15 wt% of the baked product; about 20 wt% of the baked product; about 25 wt% of the baked product. In some embodiments, the baked product may include fat in an amount of about 5 wt% to about 25 wt% of the baked product.

In some embodiments, the baked product may include fat in an amount of at least 0.1 wt% of the baked product; of at least 1 wt% of the baked product; of at least 5 wt% of the baked product; of at least 10 wt% of the baked product; of at least 15 wt% of the baked product; of at least 20 wt% of the baked product; of at least 25 wt% of the baked product

In some embodiments, the baked product may include fat in an amount of up to 0.1 wt% of the baked product; of up to 1 wt% of the baked product; of up to 5 wt% of the baked product; of up to 10 wt% of the baked product; of up to 15 wt% of the baked product; of up to 20 wt% of the baked product; of up to 25 wt% of the baked product.

In some embodiments, the baked product includes canola oil, high oleic canola oil, palm oil, soybean oil, sunflower oil, safflower oil, high oleic sunflower oil, cottonseed oil, transesterified oils, or combinations of thereof. The choice of the oil may depend on desired textural and nutritional properties of the baked product.

### Water

In some embodiments, it is desirable to use a minimal amount of water in the baked product formulation. In some embodiments, the amount of water included in a formulation is determined by the amount necessary to provide suitable dough rheology for processing and moistness in the final product.

In some embodiments, the baked good is produced from a dough. In some embodiments, the dough has a moisture content of about 1 wt% to about 20 wt% of the dough.

In some embodiments, an unbaked baked product has a moisture content of about 1 wt% to about 20 wt% of the unbaked baked product.

In some embodiments, a baked product has a moisture content of at least 5 wt% of the baked product; at least 6 wt% of the baked product; at least 7 wt% of the baked product; at least 8 wt% of the baked product; at least 9 wt% of the baked product; at least 10 wt% of the baked product; at least 11 wt% of the baked product; at least 12 wt% of the baked product; at least 13 wt% of the baked product; at least 14 wt% of the baked product; at least 15 wt% of the baked product; up to 5 wt% of the baked product; up to 6 wt% of the baked product; up to 7 wt% of the baked product; up to 8 wt% of the baked product; up to 9 wt% of the baked product; up to 10 wt% of the baked product; up to 11 wt% of the baked product; up to 12 wt% of the baked product; up to 13 wt% of the baked product; up to 14 wt% of the baked product; up to 15 wt% of the baked product; or up to 16 wt% of the baked product; about 5 wt% to about 16 wt% of the baked product; about 6 wt% to about 16 wt% of the baked product; about 7 wt% to about 16 wt% of the baked product; about 8 wt% to about 16 wt% of the baked product; about 8 wt% to about 15 wt% of the baked product; about 8 wt% to about 14 wt% of the baked product; about 9 wt% to about 14 wt% of the baked product; about 9 wt% to about 13 wt% of the baked product.

In some embodiments, the baked product described herein has a water activity (Aw) of at least 0.5; of at least 0.55; of at least 0.6; of at least 0.65; of at least 0.7; of about 0.5 to about 0.7; of about 0.55 to about 0.65; of about 0.6 to about 0.65.

### Inclusions

Baked products described herein may include suitable inclusions that may be provided to or in a dough used to prepare the baked product. Inclusions may provide textural, aesthetic, as well as nutritional benefits. In some embodiments, inclusions may provide an additional source of protein. In baked products of some embodiments of the invention, an inclusion is understood to be a component of the baked product that does not become part of the dough matrix. Such inclusions may be visually or texturally distinguishable as an entity in a baked product. In some embodiments, a baked product may contain inclusions such as fruit, grains, pseudocereals, and/or seeds, such as oats, buckwheat, rye, barley, spelt, kamut, wheat, spelt, buckwheat, millet, sorghum, kamut, triticale, quinoa, chia, soy beans, and/or amaranth. These inclusions can come in variety forms, e.g., whole particles, groats, grits, flakes; rice crisps, and/or chocolate chips, nougat, caramel inclusions, and any other suitable inclusion, or combinations thereof. Suitable grain inclusions may include those grains and seeds in amounts described in the Carbohydrate section above. Suitable fruit inclusions may include but are not limited to blueberries, strawberries, raspberries, nuts or seeds (e.g., chopped almonds, peanuts) bananas, peaches, raisins, cranberries and the like.

In some embodiments, formulations and methods described herein allow for high levels of certain inclusions while maintaining high protein content in the baked product, even where such inclusions themselves have little or no protein content. For example, fruit may have little or no protein content.

In some embodiments, the baked product includes inclusions in an amount of about 1 wt% or more of the baked product; about 5 wt% or more of the baked product; about 10 wt% or more of the baked product; about 15 wt% or more of the baked product; about 1 wt% to about 15 wt% of the baked product; about 1 wt% to about 10 wt% of the baked product; about 5 wt% to about 10 wt% of the baked product; about 1 wt% of the baked product; about 2 wt% of the baked product; about 3 wt% of the baked product; about 4 wt% of the baked product; about 5 wt% of the baked product; about 6 wt% of the baked product; about 7 wt% of the baked product; about 8 wt% of the baked product; about 9 wt% of the baked product; about 10 wt% of the baked product; about 11 wt% of the baked product; about 12 wt% of the baked product; about 13 wt% of the baked product; about 14 wt% of the baked product; or about 15 wt% of the baked product.

In some embodiments, inclusions may contribute to the texture of the baked product and contribute to the provision of a multi-textured baked product described herein. In some embodiments, inclusions may be selected in order to provide an inclusion texture that is distinct from the overall texture of the baked product. For example, it may be desired to select inclusions which provide a texture that is crunchy, crispy, or chewy, without being overly hard or toothpacking. Such textures may be in contrast to the texture of the baked product matrix and thereby create a dual-texture experience. In some embodiments, preferred inclusions maintain their distinct texture and/or the dual texture of the baked product over a shelf life of the baked product, such as a shelf life of at least 1 month; at least 2 months; at least 3 months; at least 6 months; at least 9 months; or at least 1 year.

### Additional Components

Baked products of some embodiments may also include ingredients such as emulsifiers, buffering agents, leavening agents, seasoning, preservatives and sweeteners. Suitable leavening agents may include but are not limited to ammonium bicarbonate, sodium bicarbonate, sodium acid pyrophosphate or mixtures thereof. In one embodiment, a baked product includes a combination of ammonium bicarbonate, sodium bicarbonate, and sodium acid pyrophosphate. In another embodiment, a baked product includes a combination of sodium bicarbonate and sodium acid pyrophosphate.

Additional ingredients or additional components may include vitamins or minerals such as vitamin B1, B2, B3, B6, B12, iron, magnesium, calcium or mixtures thereof. Baked products may also include salt, flavoring agents such as vanilla, cocoa powder, milk and dairy derivatives.

Additional components may also include optional toppings, such as, for example, a chocolate topping applied to a surface of a baked product as described herein.

### Density

Density is a measurement of the mass per unit volume of the finished product and is expressed in g/cm³. Density of bakery products can be conveniently measured using a Volscan Profiler from Stable Micro Systems. This equipment is a bench top laser-based scanner that measures the volume of individual finished products without contact. The use of the Volscan Profiler is approved by AACC (American Association of Cereal Chemists) under the AACCI Standard Method referenced 10.16.01, the entirety of which is incorporated herein by reference. The volume of the products was measured using the VolScan Profiler and the mass was measured to the 0.1 g using a separate balance. Density was then calculated as the mass (in g) divided per the volume (in cm³).

In some embodiments, the baked product described herein may have a density of up to 0.95 g/cm³. In some embodiments, the baked product described herein may have a density of up to 0.92 g/cm³. In some embodiments, the baked product described herein may have a density of up to 0.9 g/cm³. In some embodiments, the baked product may have a density of up to 0.84 g/cm³. In some embodiments, the baked product described herein may have a density of up to 0.82 g/cm³. In some embodiments, the baked product described herein may have a density of up to 0.8 g/cm³. In some embodiments, the baked product described herein may have a density of up to 0.75 g/cm³. In some embodiments, the baked product described herein may have a density of about 0.6 g/cm³ to about 0.95 g/cm³. In some embodiments, the baked product described herein may have a density of about 0.6 g/cm³ to about 0.9 g/cm³. In some embodiments, the baked product described herein may have a density of about 0.6 g/cm³ to about 0.85 g/cm³. In some embodiments, the baked product described herein may have a density of about 0.6 g/cm³ to about 0.82 g/cm³. In some embodiments, the baked product described herein may have a density of about 0.6 g/cm³ to about 0.8 g/cm³. In some embodiments, the baked product described herein may have a density of about 0.6 g/cm³ to about 0.75 g/cm³. In some embodiments, the baked product described herein may have a density of about 0.6 g/cm³ to about 0.7 g/cm³. In some embodiments, the baked product described herein may have a density of about 0.7 g/cm³ to about 0.95 g/cm³. In some embodiments, the baked product described herein may have a density of about 0.7 g/cm³ to about 0.9 g/cm³. In some embodiments, the baked product described herein may have a density of about 0.7 g/cm³ to about 0.8 g/cm³.

### Filling

Baked products described herein may also include a filling, for example, to create a baked product with a layer of filling or a sandwich snack. Any suitable filling may be included, such as sweet or savory fillings. In some embodiments, suitable fillers may be fat or sugar based. In some embodiments, a suitable filling is formulated to provide the desired nutritional, textural and/or flavor properties for the sandwich cereal snack. A filling may be added to the baked product in any suitable manner, and in some embodiments, the filling is added after baking to provide the resulting baked product.

In some embodiments, a filled baked snack includes at about 10 wt% to about 30 wt% filling; about 10 wt% to about 25 wt% filling; about 15 wt% to about 25 wt% filling; at least 10 wt% filling; at least 15 wt% filling; at least 20 wt% filling; at least 25 wt% filling; or at least 30 wt% filling.

### Preparation

In some embodiments, baked products described herein may be prepared according to any suitable method, such as those employed in traditional biscuit preparation to provide a dough, while still maintaining a desired protein content level in the finished product.

Baked products of some embodiments described herein may be prepared according to conditions suitable for achieving the desired levels of protein (i.e., high protein) in the finished baked product.

In some embodiments, a dough may be extruded and/or wire cut to provide a dough piece of a selected size and shape. With some extrusion embodiments, the dough is directly shaped as a rope or slab and put on a plain baking belt and then cut into individual pieces before or after baking. In some embodiments, the rheology of the dough may be configured such that the dough may flow well through the wire cut. In some embodiments, the ingredients of the dough may be added during mixing such that the spread of a resulting dough piece may be controlled during baking. Alternatively, the dough can also be shaped with rotary molding technology, provided dough hydration, or modified by adapting the dough lay time.

In some embodiments, a protein component is added to the dough during the preparation of the baked products described herein (e.g., prior to baking). The protein component may be or may include a powdered protein source and a particulate protein source. In some embodiments, the powdered protein source may be added to the dough before the particulate protein source. For example, a powdered protein source may be added to the dough before any mixing, extrusion, wire cutting, rotary molding, and/or working of the dough while the particulate protein source may be added after any mixing, rotary molding or working of the dough to prevent any comminution of the particulate protein source. In some embodiments, the powdered protein source and particulate protein source may therefore be added separately to the dough in two or more portions. In some embodiments, the powdered protein source and particulate protein source may be added to the dough sequentially, where additional materials may be added to the dough in between the addition of the powdered protein source and particulate protein source.

Dough pieces may also be formed by any other suitable method, including pan baking, wire cutting, sheeting and cutting with the reciprocal cutter.

The pieces may be transferred to the belt conveyer and further to the oven for baking.

The formed dough pieces may then be baked to a desired moisture content. In some embodiments, a baked product has a moisture content as described herein.

In some embodiments, the dough pieces are baked.

In some embodiments, an oven temperature may range from about 120 °C to about 250 °C, or about 150 °C to about 230 °C during baking. Various types of ovens can be adjusted to processing conditions required to produce a baked product described herein.

In some embodiments, a baked product described herein may be coated and/or seasoned. In some embodiments, a filling may be added to the baked product. In some embodiments, a baked product may be cooled and then packaged.

In some embodiments, the baked product described herein, or dough piece or dough used to prepare the same, is not cook-extruded or bake-extruded.

In some embodiments, the baked product described herein, or dough piece or dough used to prepare the same, is not dried.

In some embodiments, the baked product described herein, or dough piece or dough used to prepare the same, is not freeze-dried.

In some embodiments, the baked product described herein, or dough piece or dough used to prepare the same, does not include a coloring agent.

In some embodiments, the baked product described herein, or dough piece or dough used to prepare the same, does not include a preservative.

In some embodiments, the baked product described herein, or dough piece or dough used to prepare the same, does not include artificial flavors.

In some embodiments, the baked product described herein, or dough piece or dough used to prepare the same, does not include high-intensity sweeteners.

### Sensory Characteristics

Baked products described herein may be formulated and/or prepared to include desirable nutritional and sensory attributes. For example, baked products described herein may be formulated and/or prepared to include a high protein content, while still maintaining desired nutrition and sensory attributes. Desired nutrition may include particular levels of whole grains, fat, and/or sugar as described herein. Sensory attributes may include textural properties. This combination of high protein content, desirable nutrition, and desirable sensory attributes is unexpected, as products with high protein content may have an overly hard texture (when proteins are used in powdered form) or a composite crumbly texture (when proteins are used in particulate form) rather than a soft texture, as is found in the soft-baked products described herein. Moreover, the density of the baked products described herein have a density comparable to that of the same food form which have not been enriched in proteins (see the Examples below). The relatively light and airy texture - compared to products in the field - contributes to the soft mouth feel of the products of the described herein.

The following examples, wherein all parts, percentages, and ratios are by weight, and all temperatures are in °C unless indicated to the contrary, illustrate some embodiments of the invention:

### Examples

An exemplary dough formulation in accordance with the invention is set forth in Table 1.

**Table 1**

| **Ingredients** | **Wt% of Dough** |
|---|---|
| wheat flour | 4-22 |
| oat cuts or multigrain blend or wheat germ flakes | 0-15 |
| liquid oil (or fat) with emulsifier | 10-15 |
| Glycerin | 3-7 |
| Sugar | 12-22 |
| Water | 5-15 |
| leavening agent | <1 |
| Salt | <1 |
| powder eggs | 0-2 |
| soluble fiber | 0-10 |
| Flavor | <1 |
| isolated sov protein | 2-9 |
| Partially hydrolyzed wheat gluten | 5-14 |
| Whey protein concentrate | 0-7 |
| soy crisps | 0-15 |
| whey crisps | 0-15 |
| inclusions (chocolate, fruit...) | 0-10 |
| Total | 100 |

### Example 1: Exemplary Baked Products

Various exemplary baked products were tested to determine their respective protein contents, flour content, density, sugar content, fat content, and fiber content. The result of such study is present herein below in Table 2.

**Table 2**

| | **Total protein in FP (FP)** | **Protein from PS and PtS (PP)** | **Ratio PP/FP** | **%P in PS** | **%P in PtS** | **% Flour in FP** | **Density (g/cm³)** | **% Sugars** | **% Fats** | **%Fib** |
|---|---|---|---|---|---|---|---|---|---|---|
| #1 | 24% | 21% | 88% | 78% | 22% | 13% | 0.79 | 22% | 16% | 2% |
| #2 | 25% | 22% | 88% | 62% | 38% | 10% | 0.74 | 22% | 17% | 2% |
| #3 | 22% | 18% | 83% | 75% | 25% | 16% | 0.70 | 22% | 16% | 3% |
| #4 | 24% | 21% | 86% | 78% | 22% | 13% | 0.77 | 22% | 17% | 3% |
| #5 | 26% | 22% | 84% | 58% | 42% | Not Meas | 0.80 | 22% | 18% | 6% |
| #6 | 26% | 22% | 83% | 58% | 42% | 9% | 0.82 | 22% | 16% | 6% |
| #7 | Not Meas | 22% | Not Meas | 46% | 54% | 9% | 0.84 | Not Meas | Not Meas | Not Meas |
| #8 | Not Meas | Not Meas | Not Meas | Not Meas | Not Meas | Not Meas | 0.78 | Not Meas | Not Meas | Not Meas |
| #9 | 26% | 22% | Not Meas | 46% | 54% | 9% | 0.82 | 20% | 16% | 7% |
| #10 | 26% | 22% | Not Meas | 46% | 54% | 9% | 0.86 | 20% | 16% | 7% |

All percentages in weight% of final product; FP = final product; PS = powdered protein source; %P = % protein; PtS = particulate protein source; PP = total protein from PS and PtS; Fib = fiber; Not Meas = a value that was not measured for this study.

Of the data provided in Table 2, baked product Nos. 1-6 derive the majority of their total protein from the powdered protein source and particulate protein source.

### Example 2: High Protein Baked Good Containing Chocolate and Fruit

A multi-textured, high protein, baked product may be prepared as set forth in Table 3.

**Table 3**

| **Ingredients** | **Wt% of Dough** |
|---|---|
| wheat flour | 11 |
| oat cuts or multigrain blend or wheat germ flakes | 8 |
| liquid oil with emulsifier | 13 |
| glycerin | 5 |
| sugar | 16 |
| water | 9 |
| leavening agent | <1 |
| salt | <1 |
| powder eggs | 1 |
| soluble fiber | 4 |
| flavor | <1 |
| isolated soy protein | 4 |
| Partially hydrolyzed wheat gluten | 8 |
| soy crisps | 11 |
| whey crisps | 3 |
| inclusions (chocolate, fruit...) | 6 |
| Total | 100 |

The mixing process included the following steps:
- All liquids were mixed at high speed;
- Powders (e.g., sugar, cuts/flakes, powdered eggs, fiber, small powders) and partially hydrolyzed wheat gluten were added at high speed;
- Flour and isolated soy protein were added at low speed; and
- Inclusions and crisps were added at low speed to provide a resulting dough.

The dough prepared by the process of Table 3 was then baked as set forth herein to provide a multi-texture, soft-baked product. This product contains 11 % of flour on dough basis, contains two sources of powdered proteins (partially hydrolyzed wheat proteins and soy proteins isolates), contains two sources of particulate proteins (soy crisps and whey crisps) and has a density of 0.82. The proportion of proteins provided by the powders and the particulates is 46% and 54%, respectively.

### Example 3: High Protein Baked Good Containing Whey Crisps and Pea Crisps

A multi-textured, high protein, baked product may be prepared as set forth in Table 4.

**Table 4**

| **Ingredients** | **Wt% of Dough** |
|---|---|
| wheat flour | 9 |
| buckwheat grits or wheat germ flakes | 8 |
| Sugar | 14 |
| glucose syrup | 7 |
| Glycerin | 5 |
| Water | 6 |
| liquid eggs | 4 |
| rapeseed oil or emulsifiers | 14 |
| Salt | <1 |
| leavening agent | <1 |
| Inclusions | 4 |
| Flavor | <1 |
| whey protein | 3 |
| soy protein isolate | 6 |
| partially hydrolyzed wheat protein | 9 |
| whey crisps | 6 |
| pea crisps | 6 |
| Total | 100 |

The mixing process included the following steps:
- All liquids were mixed at high speed;
- Powders (e.g., whey protein, wheat protein, small powders) and buckwheat grits were added at high speed;
- Flour, sugar, wheat germ, and isolated soy protein were added at low speed; and
- Inclusions and crisps were added at low speed to provide a resulting dough.

The dough prepared by the process of Table 4 was then baked as set forth herein to provide a multi-texture, soft-baked product. This product contains 9% of flour on dough basis, contains two sources of powdered proteins (partially hydrolyzed wheat proteins and soy proteins isolates), contains two sources of particulate proteins (pea crisps and whey crisps) and has a density of 0.74. The proportion of proteins provided by the powders and the particulates is 62% and 38%, respectively.

### Example 4: High Protein Baked Good Containing Whey Crisps and Soy Crisps

A multi-textured, high protein, baked product may be prepared as set forth in Table 5.

**Table 5**

| **Ingredients** | **Wt% of Dough** |
|---|---|
| Water | 9 |
| Leavening | <1 |
| Glycerine | 5 |
| Flavors | <1 |
| Invert Syrup | 5 |
| Canola Oil and emulsifiers | 14 |
| Powdered Egg | 1 |
| Emulsifier powder | 1 |
| partially hydrolyzed Wheat protein | 9 |
| Grain blend- buckwheat, oats, rye | 5 |
| Soluble fiber | 3 |
| Salt | <1 |
| Soy protein isolate | 6 |
| Sugar | 12 |
| Wheat flour and wheat germ | 13 |
| Soy crisps | 9 |
| Whey crisps | 3 |
| Inclusions | 7 |
| Total | 100 |

The mixing process included the following steps:
- Water and leavener were mixed at low speed;
- Glycerine, invert syrup, oil, emulsifier, and flavors were added at low speed;
- Powders (e.g., wheat protein, egg, emulsifier powder, grain blend, polydextrose, sugar, and salt) were added at high speed;
- Flour, wheat germ, and soy protein isolate were added at low speed; and
- Inclusions and crisps were added at low speed to provide a resulting dough.

The dough prepared by the process of Table 5 was then baked as set forth herein to provide a multi-texture, soft-baked product. This product contains 9% of flour on dough basis, contains two sources of powdered proteins (partially hydrolyzed wheat proteins and soy proteins isolates), contains two sources of particulate proteins (soy crisps and whey crisps), and has a density of 0.80. The proportion of proteins provided by the powders and the particulates is 58% and 42%, respectively.

### Example 5: High Protein Baked Good.

A multi-textured, high protein, baked product may be prepared as set forth in Table 6 having one source of powdered protein (wheat) and one source of particulate protein (pea).

**Table 6**

| **Ingredients** | **Wt% of Dough** |
|---|---|
| wheat flour | 14 |
| buckwheat grits / wheat germ flakes / oat cuts | 6 |
| sugar | 14 |
| glucose syrup | 7 |
| glycerin | 5 |
| water | 6 |
| liquid eggs | 4 |
| rapeseed oil and emulsifiers | 14 |
| salt | <1 |
| leavening agent | <1 |
| inclusions | 4 |
| flavor | <1 |
| partially hydrolyzed wheat protein | 20 |
| pea crisps | 6 |
| total | 100 |

The mixing process included the following steps:
- All liquids were mixed at high speed;
- Powders (e.g., wheat protein, small powders), grits-flakes-cuts were added at high speed;
- Flour, sugar, wheat germ were added at low speed; and
- Inclusions and pea crisps were added at low speed to provide a resulting dough.

The dough prepared by the process of Table 6 was then baked as set forth herein. The finished product was, however, very dense (1.0 g/cm³) with a firm mouth feel and degraded sensory properties compared to Examples 2 to 4. In this example, one powdered protein source was used (partially hydrolyzed wheat proteins) in combination with one particulate proteins source (pea crisps). In order to reach the high protein requirement, the incorporation of partially hydrolyzed wheat protein was of 20% on dough basis. Without wishing to be bound by any one theory of the invention, it is possible that only using one source of powdered protein and particulate protein generates a more marked deviation in processing ability and ultimately does not allow for the preferred product attributes in terms of density and mouthfeel. Blending at least two sources of proteins in the forms of powders and in the form of particulates, i.e., blending in total four different sources of proteins, allows for the desired low density of the finished product.

### Example 6: High Protein Baked Good.

A multi-textured, high protein, baked product may be prepared as set forth in Table 7 having one source of powdered protein (soy) and one source of particulate protein (pea).

**Table 7**

| **Ingredients** | **Wt% of Dough** |
|---|---|
| wheat flour | 14 |
| buckwheat grits / wheat germ flakes / oat cuts | 6 |
| Sugar | 14 |
| glucose syrup | 7 |
| Glycerin | 5 |
| Water | 6 |
| liquid eggs | 4 |
| rapeseed oil and emulsifiers | 14 |
| Salt | <1 |
| leavening agent | <1 |
| Inclusions | 4 |
| Flavor | <1 |
| soy protein isolate | 20 |
| pea crisps | 6 |
| Total | 100 |

The mixing process included the following steps:
- All liquids were mixed at low speed;
- Powders (e.g., soy protein isolate, small powders), grits-flakes-cuts were added at high speed;
- Flour, sugar, wheat germ were added at low speed; and
- Inclusions and pea crisps were added at low speed to provide a resulting dough.

The dough prepared by the process of Table 7 was then baked. The finished product was however very dense (1.0 g/cm³) with a very hard bite. In this example, one powdered protein source was used (soy protein isolate) in combination with one particulate proteins source (pea crisps). In order to reach the high protein requirement, the incorporation of partially hydrolyzed wheat protein was of 20% on dough basis. Without wishing to be bound by any one theory of the invention, it is possible that only using one source of powdered protein and particulate protein generates a more marked deviation in dough rheology which is difficult to correct. Blending at least two sources of proteins in the forms of powders and in the form of particulates, i.e., blending in total four different sources of proteins allows for the desired low density of the finished product.

### Example 7: High Protein Baked Good Containing Whey Crisps and Soy Crisps

A multi-textured, high protein, baked product can be prepared as set forth in Table 8.

**Table 8**

| **Ingredients** | **Wt% of Dough** |
|---|---|
| Soy Crisps | 9 |
| Whey Crisps | 3 |
| Leavening | <1 |
| Invert Syrup | 7 |
| Grain Blend - buckwheat, oats, rye | 7 |
| Fats and Emulsifiers | 11 |
| Partially hydrolyzed wheat gluten | 9 |
| Sugar | 11 |
| Glycerine | 5 |
| Powdered egg | 1 |
| Soluble fiber | 3 |
| Soy protein isolate | 7 |
| Wheat germ | 4 |
| Wheat Flour | 4 |
| Inclusions | 7 |
| Flavors | <1 |
| Salt | <1 |
| Water | 10 |
| Total | 100 |

The dough prepared by the process of Table 8 can be mixed and baked as set forth variously herein to provide a multi-texture, soft-baked product. This product contains 4% of flour on dough basis, two sources of powdered proteins (partially hydrolyzed wheat proteins and soy proteins isolates), and two sources of particulate proteins (soy crisps and whey crisps).

### Example 8: High Protein Baked Good Containing Whey Crisps and Soy Crisps

A multi-textured, high protein, baked product can be prepared as set forth in Table 9.

**Table 9**

| **Ingredients** | **Wt% of Dough** |
|---|---|
| Water | 9 |
| Leavening | <1 |
| Glycerine | 5 |
| Flavors | <1 |
| Invert Syrup | 7 |
| Canola Oil and Emulsifiers | 12 - 13 |
| Emulsifier Powder | 1 |
| Partially hydrolyzed Wheat Protein | 9 |
| Grain Blend - buckwheat, oats, rye | 5 |
| Soluble Fiber | 3 |
| Salt | <1 |
| Soy Protein Isolate | 6 |
| Sugar | 11 |
| Wheat Flour and Wheat Germ | 12 |
| Soy Crisps | 9 |
| Whey Crisps | 4 |
| Inclusions | 6-7 |
| Total | 100 |

The dough prepared by the process of Table 9 can be mixed and baked as set forth variously herein to provide a multi-texture, soft-baked product. This product contains two sources of powdered proteins (partially hydrolyzed wheat proteins and soy proteins isolates) and two sources of particulate proteins (soy crisps and whey crisps).

All patents, published patent applications, and other publications set forth herein are incorporated by reference in their entirety.

It will be appreciated by those skilled in the art that changes could be made to the exemplary embodiments shown and described above without departing from the broad inventive concept thereof. It is understood, therefore, that this invention is not limited to the exemplary embodiments shown and described, but it is intended to cover modifications within the spirit and scope of the invention as defined by the claims. For example, specific features of the exemplary embodiments may or may not be part of the claimed invention and features of the disclosed embodiments may be combined.

Moreover, as used herein, the term "about" means that dimensions, sizes, formulations, parameters, shapes and other quantities and characteristics are not and need not be exact, but may be approximate and/or larger or smaller, as desired, reflecting tolerances, conversion factors, rounding off, measurement error and the like, and other factors known to those of skill in the art. In general, a dimension, size, formulation, parameter, shape or other quantity or characteristic is "about" or "approximate" whether or not expressly stated to be such. It is noted that embodiments of very different sizes, shapes and dimensions may employ the described arrangements.

It is to be understood that at least some of the descriptions of the invention have been simplified to focus on elements that are relevant for a clear understanding of the invention, while eliminating, for purposes of clarity, other elements that those of ordinary skill in the art will appreciate may also comprise a portion of the invention.
The invention will now be described further in relation to the following numbered clauses.
1. A multi-textured soft-baked product comprising:
   a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component.
2. The multi-textured soft-baked product of clause 1, comprising a grain flour in an amount of about 4% to about 10% by weight of the soft-baked product.
3. The multi-textured soft-baked product of clause 1 or clause 2, wherein the soft-baked product has a density of up to 0.92 g/cm³.
4. The multi-textured soft-baked product of any one of clauses 1 to 3, wherein the soft-baked product has a density of up to 0.82 g/cm³.
5. A multi-textured soft-baked product comprising:
   a grain flour that is at least 4% by weight of the soft-baked product, and a protein component that includes a powdered protein source and a particulate protein source;
   wherein the soft-baked product has a density of up to 0.92 g/cm³.
6. The multi-textured soft-baked product of clause 5, wherein the protein component is about 20 g to about 30 g per 100 g of the soft-baked product.
7. The multi-textured soft-baked product according to any one of the preceding clause, wherein the soft-baked product has a density of about 0.6 g/cm³ to about 0.9 g/cm³.
8. The multi-textured soft-baked product according to any one of the preceding clauses, comprising a water activity (Aw) of at least 0.5.
9. The multi-textured soft-baked product according to any one of the preceding clauses, comprising a water activity (Aw) of about 0.5 to about 0.7.
10. The multi-textured soft-baked product according to any one of the preceding clauses, comprising a moisture content of at least 5% by weight of the soft-baked product.
11. The multi-textured soft-baked product according to any one of the preceding clauses, comprising a moisture content of at least 8% by weight of the soft-baked product.
12. The multi-textured soft-baked product according to any one of the preceding clauses, comprising a moisture content of at least 9% by weight of the soft-baked product.
13. The multi-textured soft-baked product according to any one of the preceding clauses, comprising a moisture content of between about 8% and 16% by weight of the soft-baked product.
14. The multi-textured soft-baked product according to any one of the preceding clauses, comprising a moisture content of between about 8% and 15% by weight of the soft-baked product.
15. The multi-textured soft-baked product according to any one of the preceding clauses, comprising a moisture content of between about 8% and 14% by weight of the soft-baked product.
16. The multi-textured soft-baked product according to any one of the preceding clauses, comprising a protein content of about 20 g to about 27 g per 100 g of the soft-baked product.
17. The multi-textured soft-baked product according to any one of the preceding clauses, wherein the powdered protein source comprises a protein selected from the group consisting of a plant-based protein, a milk-based protein, an egg-based protein, and a combination thereof.
18. The multi-textured soft-baked product according to any one of the preceding clauses, wherein the powdered protein source comprises a protein selected from the group consisting of a plant-based protein, a milk-based protein, and a combination thereof.
19. The multi-textured soft-baked product of clause 17 or clause 18, wherein the plant-based protein is selected from the group consisting of soybean protein, wheat protein, and a combination thereof.
20. The multi-textured soft-baked product of any one of clauses 17 to 19, wherein the wheat protein comprises partially hydrolyzed wheat gluten or lightly hydrolyzed wheat gluten.
21. The multi-textured soft-baked product of clause 17 or clause 18, wherein the milk-based protein comprises whey proteins.
22. The multi-textured soft-baked product according to any one of the preceding clauses, wherein the particulate protein source comprises a protein selected from the group consisting of a plant-based proteins, milk-based proteins, egg-based, and a combination thereof.
23. The multi-textured soft-baked product according to any one of the preceding clauses, wherein the particulate protein source comprises a protein selected from the group consisting of a plant-based proteins, milk-based proteins, and a combination thereof.
24. The multi-textured soft-baked product of clause 22 or clause 23, wherein the plant-based protein is selected from the group consisting of pulse proteins, soybean proteins, wheat proteins, and a combination thereof.
25. The multi-textured soft-baked product of clause 22 or clause 23, wherein the milk-based protein is selected from the group consisting of milk protein, whey protein, and a combination thereof.
26. The multi-textured soft-baked product according to any one of the preceding clauses, wherein the particulate protein source is provided in the form of crisps, pellets, bits, particles, or a combination thereof.
27. The multi-textured soft-baked product according to any one of the preceding clauses, wherein the grain flour is about 4% to about 10% by weight of the soft-baked product.
28. The multi-textured soft-baked product according to any one of the preceding clauses, wherein the grain flour is about 4.5% to about 9% by weight of the soft-baked product.
29. The multi-textured soft-baked product according to any one of the preceding clauses, wherein the grain flour is about 5% to about 8% by weight of the soft-baked product.
30. The multi-textured soft-baked product according to any one of clauses 2 to 29, wherein the grain flour is selected from the group consisting of wheat flour, Graham flour, soft wheat flour, hard wheat flour, buckwheat flour, oat flour, corn flour, rye flour, barley flour, spelt flour, rice flour, millet flour, teff flour, triticale flour, amaranth flour, quinoa flour, durum wheat flour, kamut flour, and a combination thereof.
31. The multi-textured soft-baked product according to any one of the preceding clauses, comprising fat in an amount of about 0.1% to about 25% by weight of the soft-baked product.
32. The multi-textured soft-baked product according to clause 31, comprising fat in an amount of about 5% to about 25% by weight of the soft-baked product.
33. The multi-textured soft-baked product according to any one of the preceding clauses, comprising sugars in an amount of about 0.1% to about 27% by weight of the soft-baked product.
34. The multi-textured soft-baked product according to clause 33, comprising sugars in an amount of up to 27% by weight of the soft-baked product.
35. The multi-textured soft-baked product according to any one of the preceding clauses, comprising an inclusion selected from the group consisting of fruit, grains, pseudo-cereals, seeds, and a combination thereof.
36. The multi-textured soft-baked product according to any one of the preceding clauses, comprising an additional component selected from the group consisting of an emulsifier, a vitamin, a mineral, a flavoring agent, a vitamin, a buffering agent, leavening agent, a seasoning, a preservative, a sweetener, and a combination thereof.
37. The multi-textured soft-baked product according to any one of the preceding clauses, wherein the soft-baked product has a protein digestibility corrected amino acid score (PDCAAS) of at least 0.8.
38. A multi-textured soft-baked product comprising:
   a protein component that is about 20 g to about 30 g per 100 g of the soft-baked product and includes a powdered protein source in an amount from 35% by weight to 85% by weight of the protein component and a particulate protein source in an amount from 15% by weight to 65% by weight of the protein component;
   wherein the soft-baked product has a density of up to 0.92 g/cm³.
39. The multi-textured soft-baked product of clause 38, wherein the soft-baked product has a density of up to 0.82 g/cm³.
40. The multi-textured soft-baked product of clause 38 or 39, wherein the protein component is about 20 g to about 27 g per 100 g of the soft-baked product.
41. The multi-textured soft-baked product of any one of the preceding clauses, wherein the particulate protein source comprises at least one protein particle comprising at least about 50% protein by weight of the protein particle.
42. The multi-textured soft-baked product of any one of the preceding clauses, wherein the powdered protein source is present in an amount of about 40% by weight to about 60% by weight of the protein component and the particulate protein source is present in an amount of about 40% by weight to about 60% by weight of the protein component.
43. The multi-textured soft-baked product of any one of the preceding clauses, wherein the powdered protein source comprises at least two different powdered protein sources and the particulate protein source comprises at least two different particulate protein sources.
44. The multi-textured soft-baked product according to any one of preceding clauses, wherein the protein component consists of the powdered protein source and the particulate protein source.
45. A method of making a multi-textured soft-baked product, comprising the steps of:
   (a) preparing a dough comprising a grain flour and a protein component comprising a powdered protein source and a particulate protein source, wherein the powdered protein source is provided at about 35% by weight to about 85% by weight of the protein component and the particulate protein source is provided at about 15% by weight to about 65% by weight of the protein component; and
   (b) baking the dough to provide a multi-textured soft-baked product.
46. The method of clause 45, wherein the protein component is about 20 g to about 30 g per 100 g of the soft-baked product.
47. The method of clause 45 or clause 46, wherein the grain flour is at least 4% by weight of the multi-textured soft-baked product.
48. The method according to any one of clauses 45 to 47, wherein the multi-textured soft-baked product has a density of up to 0.92 g/cm³.
49. The method according to any one of clauses 45 to 48, wherein the multi-textured soft-baked product has a density of about 0.6 g/cm³ to about 0.9 g/cm³.
50. The method according to any one of clauses 45 to 49, comprising a water activity (Aw) of at least 0.5.
51. The method according to any one of clauses 45 to 50, comprising a water activity (Aw) of about 0.5 to about 0.7.
52. The method according to any one of clauses 45 to 51, comprising a moisture content of at least 5% by weight of the multi-textured soft-baked product.
53. The method according to any one of clauses 45 to 52, comprising a moisture content of at least 8% by weight of the multi-textured soft-baked product.
54. The method according to any one of clauses 45 to 53, comprising a moisture content of at least 9% by weight of the multi-textured soft-baked product.
55. The method according to any one of clauses 45 to 54, comprising a moisture content of about 8% to about 16% by weight of the multi-textured soft-baked product.
56. The method according to any one of clauses 45 to 55, comprising a moisture content of about 8% to about 15% by weight of the multi-textured soft-baked product.
57. The method according to any one of clauses 45 to 56, comprising a moisture content of about 8% to about 14% by weight of the multi-textured soft-baked product.
58. The method according to any one of clauses 45 to 57, comprising a protein content of about 20 g to about 30 g per 100 g of multi-textured soft-baked product.
59. The method according to any one of clauses 45 to 58, comprising a protein content of about 20 g to about 27 g per 100 g of the multi-textured soft-baked product.
60. The method according to any one of clauses 45 to 59, wherein the powdered protein source comprises a protein selected from the group consisting of a plant-based protein, a milk-based protein, an egg-based protein, and a combination thereof.
61. The method according to any one of clauses 45 to 60, wherein the powdered protein source comprises a protein selected from the group consisting of a plant-based protein, a milk-based protein, and a combination thereof.
62. The method of clause 60 or clause 61, wherein the plant-based protein is selected from the group consisting of soybean protein, wheat protein, and a combination thereof.
63. The method of clause 60 or clause 61, wherein the milk-based protein comprises whey proteins.
64. The method according to any one of clauses 45 to 63, wherein the particulate protein source comprises a protein selected from the group consisting of a plant-based protein, a milk-based protein, egg-based, and a combination thereof.
65. The method according to any one of clauses 45 to 64, wherein the particulate protein source comprises a protein selected from the group consisting of a plant-based protein, a milk-based protein, and a combination thereof.
66. The method of clause 64 or clause 65, wherein the plant-based protein is selected from the group consisting of pulse proteins, soybean proteins, wheat proteins, and a combination thereof.
67. The method of clause 64 or clause 66, wherein the milk-based protein is selected from the group consisting of milk protein, whey protein, casein protein, and a combination thereof.
68. The method according to any one of clauses 45 to 67, wherein the particulate protein source is provided in the form of crisps, pellets, bits, particles, or a combination thereof.
69. The method according to any one of clauses 45 to 68, wherein the grain flour is about 4% to about 10% by weight of the multi-textured soft-baked product.
70. The method according to any one of clauses 45 to 69, wherein the grain flour is about 4.5% to about 9% by weight of the multi-textured soft-baked product.
71. The method according to any one of clauses 45 to 70, wherein the grain flour is about 5% to about 8% by weight of the multi-textured soft-baked product.
72. The method according to any one of clauses 45 to 71, wherein the grain flour is selected from the group consisting of wheat flour, Graham flour, soft wheat flour, hard wheat flour, buckwheat flour, oat flour, corn flour, rye flour, barley flour, spelt flour, rice flour, millet flour, teff flour, triticale flour, amaranth flour, quinoa flour, durum wheat flour, kamut flour, and a combination thereof.
73. The method according to any one of the clauses 45 to 72, wherein the powdered protein source and particulate protein source are added separately to the dough.
74. The method according to clause 73, wherein the powdered protein source and particulate protein source are added sequentially to the dough.
75. The method according to any one of clauses 45 to 74, wherein the soft-baked product comprises fat in an amount of about 0.1% to about 25% by weight of the multi-textured soft-baked product.
76. The method according to clause 75, wherein the soft-baked product comprises fat in an amount of about 5% to about 22% by weight of the multi-textured soft-baked product.
77. The method according to any one of clauses 45 to 76, wherein the soft-baked product comprises sugars in an amount of about 0.1% to about 27% by weight of the multi-textured soft-baked product.
78. The method according to clause 77, wherein the soft-baked product comprises sugars in an amount of up to 25% by weight of the multi-textured soft-baked product.
79. The method according to any one of clauses 45 to 78, wherein the soft-baked product comprises an inclusion selected from the group consisting of fruit, grains, pseudo-cereals, seeds, and a combination thereof.
80. The method according to any one of clauses 45 to 79, wherein the soft-baked product comprises an additional component selected from the group consisting of an emulsifier, a vitamin, a mineral, a flavoring agent, a vitamin, a buffering agent, leavening agent, a seasoning, a preservative, a sweetener, and a combination thereof.
81. The method according to any one of clauses 45 to 80, wherein the protein component consists of the powdered protein source and the particulate protein source.
82. The method of any one of clauses 45 to 81, wherein the soft-baked product has a protein digestibility corrected amino acid score (PDCAAS) of at least 0.8.

## Claims

1. A multi-textured soft-baked product comprising:
a total protein content of about 12 g to about 35 g per 100 g of the soft-baked product, wherein the total protein content includes a protein component, wherein the protein component includes:
a powdered protein source in an amount from about 35 wt.% to about 85 wt.% of the protein component; and
a particulate protein source in an amount from about 15 wt.% to about 65 wt.% of the protein component;
wherein the particulate protein source has a protein content of at least about 50 wt.% and comprises globules having at least one dimension that is greater than or equal to about 1 mm; and
wherein the multi-textured soft-baked product has a water activity (Aw) of about 0.5 to about 0.7.

2. The multi-textured soft-baked product of any one of the preceding claims, wherein the multi-textured soft-baked product has a moisture content of about 5 wt.% to about 16 wt.%.

3. The multi-textured soft-baked product according to any one of the preceding claims, wherein the soft-baked product has a density of about 0.6 g/cm³ to about 0.92 g/cm³.

4. The multi-textured soft-baked product of any one of the preceding claims, further comprising a grain flour in an amount of about 4 wt.% to about 22 wt.%.

5. The multi-textured soft-baked product according to claim 4, wherein the grain flour includes at least one of refined flour and whole grain flour.

6. The multi-textured soft-baked product according to claim 5, wherein the grain flour includes carbohydrates derived from the group consisting of whole grains, flour, flakes, grits, and cuts from cereals or pseudo-cereals, wherein the cereals or pseudo-cereals include at least one of wheat, oats, rye, barley, spelt, millet, sorghum, kamut, triticale, buckwheat, quinoa, and amaranth.

7. The multi-textured soft-baked product according to any one of the preceding claims, comprising a protein content of about 20 g to about 30 g per 100 g of the soft-baked product.

8. The multi-textured soft-baked product according to any one of the preceding claims, wherein the powdered protein source comprises a protein selected from the group consisting of a plant-based protein, a milk-based protein, an egg-based protein, soybean protein, wheat protein, partially hydrolyzed wheat gluten, lightly hydrolyzed wheat gluten, whey protein, pulse proteins, and a combination thereof.

9. The multi-textured soft-baked product according to any one of the preceding claims, wherein the particulate protein source is provided in the form of crisps, pellets, bits, particles, or a combination thereof.

10. The multi-textured soft-baked product according to any one of the preceding claims, comprising fat in an amount of about 0.1 wt.% to about 25 wt.%.

11. The multi-textured soft-baked product according to any one of the preceding claims, comprising sugars in an amount of about 0.1% to about 27% by weight of the soft-baked product.

12. The multi-textured soft-baked product according to any one of the preceding claims, comprising an inclusion selected from the group consisting of fruit, grains, pseudo-cereals, seeds, and a combination thereof.

13. The multi-textured soft-baked product according to any one of the preceding claims, comprising an additional component selected from the group consisting of an emulsifier, a vitamin, a mineral, a flavoring agent, a vitamin, a buffering agent, leavening agent, a seasoning, a preservative, a sweetener, and a combination thereof.

14. The multi-textured soft-baked product according to any one of the preceding claims, wherein the soft-baked product has a protein digestibility corrected amino acid score (PDCAAS) of at least 0.8.

15. The multi-textured soft-baked product of any one of the preceding claims, wherein the powdered protein source is present in an amount of about 40 wt.% to about 60 wt.% and the particulate protein source is present in an amount of about 40 wt.% by weight to about 60 wt.% by weight of the protein component.
